Europäisches Patentamt

European Patent Office

Office européen des brevets

(19)

(11) **EP 0 770 201 B1**

(12) **EUROPÄISCHE PATENTSCHRIFT**

(45) Veröffentlichungstag und Bekanntmachung des Hinweises auf die Patenterteilung:
**03.02.1999 Patentblatt 1999/05**

(21) Anmeldenummer: **95921698.7**

(22) Anmeldetag: **10.06.1995**

(51) Int Cl.⁶: **G01B 11/22**

(86) Internationale Anmeldenummer:
**PCT/DE95/00783**

(87) Internationale Veröffentlichungsnummer:
**WO 96/02807 (01.02.1996 Gazette 1996/06)**

(54) **VERFAHREN ZUR MESSUNG DER TIEFE EINER MIKROSTRUKTUR**

PROCESS FOR MEASURING THE DEPTH OF A MICROSTRUCTURE

PROCEDE PERMETTANT DE MESURER LA PROFONDEUR D'UNE MICROSTRUCTURE

(84) Benannte Vertragsstaaten:
**AT BE CH DE DK ES FR GB IT LI LU NL PT SE**

(30) Priorität: **13.07.1994 DE 4424565**

(43) Veröffentlichungstag der Anmeldung:
**02.05.1997 Patentblatt 1997/18**

(73) Patentinhaber: **LEONHARD KURZ GMBH & CO.**
**90763 Fürth (DE)**

(72) Erfinder: **WILD, Heinrich**
**D-90768 Fürth (DE)**

(74) Vertreter:
**LOUIS, PÖHLAU, LOHRENTZ & SEGETH**
**Postfach 3055**
**90014 Nürnberg (DE)**

(56) Entgegenhaltungen:
EP-A- 0 468 897          EP-A- 0 585 839
US-A- 4 988 198          US-A- 5 023 188

- **SOV.PHYS.-TECH.PHYS., Bd. 24, Nr. 4, April 1979 USA, Seiten 511-512, L.V. BELYAKOV E.A. 'CONTROL OF THE PHOTOCHEMICAL ETCHING OP A SEMICONDUCTOR IN HOLOGRAM RECORDING'**

## Beschreibung

Die Erfindung betrifft ein Verfahren zur Messung der Tiefe einer Mikrostruktur beim Übertragen der Struktur mittels eines Prägeverfahrens in eine verformbare Schicht.

Vor allem bei Sicherheitselementen für Wertdokumente, wie Banknoten, Kreditkarten, Ausweise etc., oder Wertgegenstände werden in jüngster Zeit in zunehmendem Maße beugungsoptisch wirksame Strukturen verwendet, die mittels eines sogenannten "Masters" in eine entsprechend verformbare Schicht eingeprägt werden. Beispielsweise werden auf diese Art und Weise Prägefolien hergestellt, von denen dann das Sicherheitselement in einem Heißprägevorgang auf ein Substrat übertragen wird. Bei der Herstellung derartiger, beugungsoptisch wirksamer Strukturen arbeitet man mit vergleichsweise geringen Prägetiefen in der Größenordnung von teilweise unter 1 μm, wobei einerseits die Prägung nicht zu seicht sein darf, weil sonst der angestrebte Effekt nicht mit der erforderlichen Deutlichkeit auftritt. Andererseits wirken sich aber auch zu tiefe Prägungen nachteilig auf den erzielten Effekt aus. Infolgedessen besteht ein dringendes Bedürfnis nach einem Verfahren, das es mit einfachen Mitteln und insbesondere ohne Beschädigung oder Veränderung der beugungsoptisch wirksamen Struktur gestattet, rasch und in jedem Produktionsschritt die erzielte Strukturtiere zu messen.

Es wäre zwar denkbar, zur Feststellung der Strukturtiefe an sich bekannte Verfahren, z.B. in Form der Messung des Beugungswirkungsgrades, heranzuziehen. Sämtliche bekannten Verfahren sind jedoch meßtechnisch aufwendig und in der Durchführung kompliziert.

Der Erfindung liegt daher die Aufgabe zugrunde, ein Verfahren zur Messung der Tiefe einer Mikrostruktur vorzuschlagen, welches besonders einfach ist, universell angewendet und darüberhinaus auch mit vergleichsweise geringem Kostenaufwand realisiert werden kann.

Zur Lösung dieser Aufgabe wird nach der Erfindung vorgeschlagen, bei einem Verfahren der eingangs erwähnten Art derart vorzugehen,

- daß in der zu übertragenden Mikrostruktur zumindest bereichsweise eine geometrisch einfache Referenz-Gitterstruktur vorgesehen ist, wobei deren Gitterelemente insbes. ein quadratisches, rechteckiges oder dreieckiges Profil aufweisen,
- daß die Referenz-Gitterstruktur mit einem Lichtstrahl bestrahlt wird, der einen bestimmten Wellenlängenbereich umfaßt,
- daß die von der erreichten Prägetiefe abhängige Wellenlänge der auftretenden Intensitätsmaxima bzw. Intensitätsminima im Beugungsspektrum 0-ter Ordnung in Transmission oder in Reflexion gemessen und aufgrund von Vergleichswerten für die jeweilige Referenzstruktur und den eingestrahlten Wellenlängenbereich aus der gemessenen Lage die erzielte Prägetiefe ermittelt wird
- oder daß aus der integralen Beurteilung der Farbe des gebeugten Lichts der 0-ten Ordnung aufgrund von Vergleichswerten auf die erreichte Prägetiefe geschlossen wird.

Das Grundprinzip des erfindungsgemäßen Verfahrens liegt somit darin, daß zur Messung der Prägetiefe der Mikrostruktur zumindest in einem bestimmten Bereich eine Referenz-Struktur eingebracht wird, wobei es sich dabei um eine geometrisch einfache Gitterstruktur, vorzugsweise mit einem quadratischen, rechteckigen oder dreieckigen Profil handelt. Im Bereich der Referenz-Gitterstruktur wird dann die spektrale Verteilung des durchtretenden bzw. reflektierten Lichtes gemessen, wobei die auftretenden Intensitäts-Maxima bzw. -Minima als direktes Maß für die Prägetiefe verwendet werden können, weil diese Maxima bzw. Minima abhängig von der Prägetiefe zu unterschiedlichen Wellenlängen des Farbspektrums wandern. Dabei ist es im allgemeinen so, daß die Minimum-Wellenlänge mit Verminderung der Strukturtiefe zu kleineren Werten wandert. Der absolute Wert der Minimum-Frequenz hängt bei richtig gewähltem Referenz-Gitterprofil im wesentlichen vom Brechungsindex des zu strukturierenden Substrates ab.

Im einzelnen liegen dem Verfahren nach der Erfindung folgende Überlegungen zugrunde, wobei einerseits eine Messung in Transmission und andererseits bei Reflexion untersucht werden sollen.

Bei Transmissionsmessung ist davon auszugehen, daß der gemessene Transmissionsgrad eines einfachen Liniengitters mit Rechteckprofil sich im wesentlichen und mit hinreichender Genauigkeit durch folgende Gleichung beschreiben läßt:

$$T(\lambda) = \cos^2\left[\frac{\pi}{2}\cdot(a+c_1)\cdot\frac{n-1}{\lambda+c_2}\right] \tag{I}$$

Dabei bedeuten

$T(\lambda)$:    Transmissionsgrad in Abhängigkeit von der Wellenlänge

a: erzielte Gitterstrukturtiefe (Stegtiefe) entsprechend der Prägetiefe in nm

$\lambda$: Wellenlänge in nm

n: Substratbrechungsindex

$c_1$, $c_2$: empirische Konstanten in nm

Für die meßtechnische Strukturtiefenauswertung wird bei der Transmissionsmessung der direkte lineare Zusammenhang zur erfaßten Minimumswellenlänge $\lambda_{min}$ herangezogen, wobei für die Strukturtiefe a gilt:

$$a(\lambda_{min}) = c_3 + \frac{\lambda min}{(n-1)} \qquad \text{(II)}$$

In der Gleichung (II) bedeuten

$\lambda_{min}$: gemessene Wellenlänge, bei der T ($\lambda$) ein Minimum besitzt, in nm

n: Substratbrechungsindex

$c_3$: empirische Konstante in nm

Bei Auswahl des richtigen Gittertyps läßt sich auf der Basis vorstehender Gleichungen (I) und (II) sowohl eine qualitative Schnellbeurteilung anhand der Haupt farbe des das Substrat durchsetzenden Lichtes als auch eine tatsächliche quantitative Strukturtiefenmessung durchführen. Auf diese Weise ist es leicht möglich, unter Einsatz eines entsprechenden, die spektrale Farbverteilung messenden Gerätes die bei der Übertragung erzielte Strukturtiefe rasch und ständig zu ermitteln, wobei eine grobe Beurteilung allein aufgrund der Farbe des das Substrat durchsetzenden Lichtes möglich ist. Dies gestattet es, bei der Erzeugung entsprechender Mikrostrukturen rasch auf Veränderungen in den Arbeitsbedingungen zu reagieren, beispielsweise durch Veränderung von Prägedruck, Temperatur beim Prägen, Härtungsgeschwindigkeit sowie der Dicken der vorhandenen, die Prägung aufnehmenden Schichten.

Während bei Transmissionsmessung im allgemeinen eine eindeutige Zuordnung des entstehenden Intensitäts-Minimums bzw. -Maximums zur erzielten Strukturtiefe möglich ist, bereitet dies bei Reflexionsmessung Schwierigkeiten, und zwar vor allem bei Verwendung von weißem Licht, weil dieses Licht häufig Wellenlängen enthält, die wesentlich kleiner sind als die angestrebte Strukturtiefe, was bedeutet, daß Mehrfach-Interferenzen auftreten. Beispielsweise können im resultierenden Spektrum zwei Minima oder Maxima vorhanden sein. Trotzdem ist es möglich, die resultierende Spektralfarbe als Kriterium für die erreichte Strukturtiefe heranzuziehen.

Bei Messung mit reflektierendem Licht gilt bei Verwendung eines entsprechenden Gitters für die Intensität des reflektierten Lichtes abhängig von dessen Wellenlänge folgende Bedingung:

$$I_{Reflexion}(\lambda) = 1 - [\cos(\frac{\pi \cdot a}{\lambda + c})]^2 \qquad \text{(III)}$$

Dabei sind:

$\lambda$: Wellenlänge in nm
a: Strukturtiefe in nm
c: zu ermittelnde Konstante in nm (beispielsweise bei dem von der Anmelderin untersuchten Gitter entsprechend -50 nm)

Im Hinblick auf die komplizierteren Verhältnisse bei der Messung mittels Reflexion, ist es zweckmäßig, anhand von Standard-Gittertiefen eine Normung des Farbspektrums für diese Gittertiefen vorzunehmen, wodurch eine quantitative Farbbeurteilung der erreichten Prägetiefe möglich ist.

Im Zusammenhang mit den vorstehenden theoretischen Überlegungen ist noch darauf hinzuweisen, daß diese sämtlich darauf beruhen, daß die Messung in der 0ten Ordnung erfolgt.

Es wurde bereits erwähnt, daß die Referenz-Gitterstruktur zweckmäßig ein quadratisches, rechteckiges oder dreieckiges Profil aufweisen sollte, weil sich dann die einfachsten Verhältnisse ergeben und die vorstehenden Gleichungen (I) bis III im wesentlichen ohne Korrekturen Gültigkeit haben. Dies bedeutet aber, daß der Meßaufwand am geringsten wird und außerdem bei Verwendung eines Meß-Lichtstrahles im Bereich des sichtbaren Lichtes auch eine qualitative Beurteilung rein durch das Auge ohne Meßgerät möglich ist.

Als besonders günstig hat es sich erwiesen, wenn für das Verfahren nach der Erfindung Referenz-Gitterstrukturen verwendet werden, die folgende Parameter aufweisen:

| | |
|---|---|
| Gitterkonstante g | $0{,}5~\mu m \leq g \leq 4~\mu m$ |
| Steg/Gitterkonstanten-Verhältn. b/g | $0{,}1 \leq b/g \leq 0{,}8$ |
| Gittertiefe a | $0{,}3~\mu m \leq a \leq 4~\mu m.$ |

Es wurde bereits darauf hingewiesen, daß die Auswertung des Meß-Lichtstrahles auf unterschiedlichste Weise erfolgen kann. Besonders zweckmäßig ist es, wenn die Farb-Auswertung des Meß-Lichtstrahles mittels eines Spektralphotometers erfolgt, weil dann zuverlässige und genaue Ergebnisse erzielt werden.

Wenn die Messung mittels Transmission erfolgt, ist nach der Erfindung weiter vorgesehen, daß bei Auswertung der Farbe des die Referenz-Gitterstruktur durchsetzenden Meß-Lichtstrahles weißes Licht verwendet wird.

Soll dagegen eine reflektierende Struktur gemessen werden, so ist es vorteilhafter, wenn als Meß-Lichtstrahl Licht eines begrenzten Wellenlängenbereiches verwendet wird. In diesem Fall ist es möglich, die bei weißem Licht auftretenden Intensitätsmaxima und -minima bei unterschiedlichen Frequenzen zum Großteil auszuschalten, so daß für die tatsächliche Strukturtiefen-Messung dann eine eindeutige Zuordnung zwischen Intensitäts-Minimum und Strukturtiefe vorhanden ist.

Aus der DE 35 18 774 C2 ist ein Verfahren zur Optimierung der Beugungseigenschaften eines Phasengitters durch Erzeugung einer optimalen, die optisch wirksame Stufenhöhe bildenden Schicht auf einem Träger bekannt. Bei diesem Verfahren wird während des Herstellungsprozesses eines periodischen Phasengitters weitgehend monochromatisches Meßlicht an dem Phasengitter gebeugt. Es wird die Strahlungsintensität der Lichtbündel mindestens zweier Beugungsordnungen gemessen und aus dem Intensitätsverhältnis der Beugungsordnungen werden Prozeßparameter abgeleitet, die zur Optimierung der Beugungseigenschaften entweder eine Erhöhung oder eine Verminderung der optisch wirksamen Stufenhöhe des Phasengitters bewirken.

Im Gegensatz dazu betrifft der Gegenstand vorliegender Erfindung ein Verfahren zur Messung der Prägetiefe einer Mikrostruktur während des Prägevorgangs, bei dem zur Beurteilung der geprägten Mikrostruktur zumindest in einem bestimmten Bereich der Mikrostruktur eine Referenz struktur eingebracht ist, diese Referenzstruktur mit einem Lichtstrahl eines bestimmten Wellenlängenbereichs bestrahlt und die auftretenden Intensitäts-Maxima bzw. Minima im Beugungsspektrum der 0-ten Ordnung als direktes Maß für die erreichte Prägetiefe gemessen werden oder in Näherung die Farbe des Lichts visuell beurteilt wird.

Weitere Merkmale, Einzelheiten und Vorteile der Erfindung ergeben sich aus der folgenden Beschreibung anhand der Zeichnung. Es zeigen:

Figuren 1a - 1c drei Beispiele für erfindungsgemäß verwendbare Gitterprofile;

Figur 2 das Meßprinzip für Transmissions-Messung;

Figur 3 das Meßprinzip für Reflexions-Messung;

Figur 4 das Empfangsprofil eines Spektralphotometers bei Messung gemäß Figur 2 und einer bestimmten Strukturtiefe und

Figuren 5a - 5d Empfangsprofile eines Spektralphotometers bei Reflexionsmessung und unterschiedlichen Strukturtiefen a.

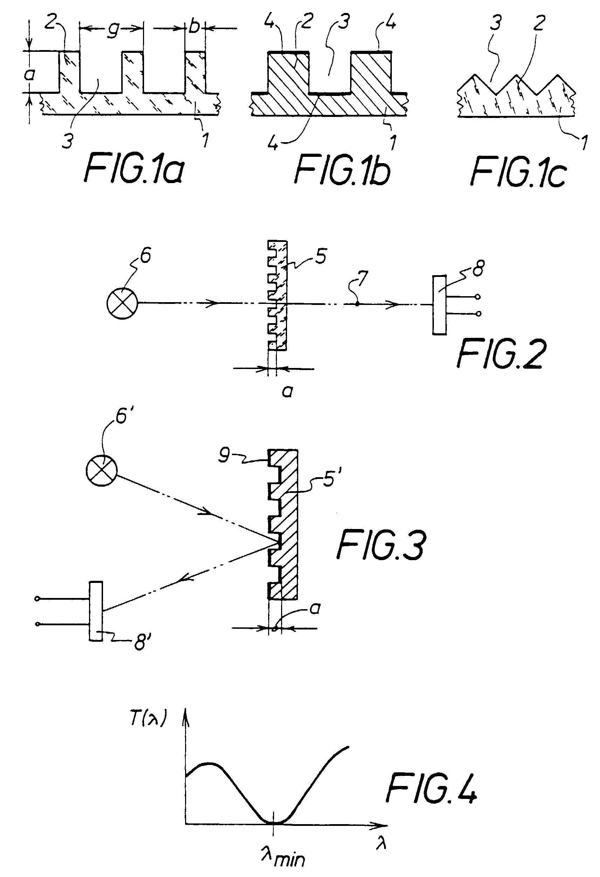

In den Figuren 1a - 1c ist veranschaulicht, daß als Referenz-Gitterstruktur für das Verfahren gemäß der Erfindung möglichst einfache Gitterstrukturen eingesetzt werden sollten, wobei es sich bei der Gitterstruktur gemäß Figur la um ein sogenanntes Rechteckgitter, bei der Gitterstruktur gemäß Figur 1b um ein quadratisches Gitter sowie bei der Struktur gemäß Figur lc um ein dreieckiges Gitter handelt. Die Gitterstrukturen der Figuren 1a bis 1c werden gleichzeitig mit der Erzeugung der sonstigen Mikrostruktur in einem Substrat ausgebildet, wobei eine entsprechende Prägung des Substrats 1 erfolgt, wodurch Gitterstege 2 und Zwischenräume 3 zwischen den Gitterstegen entstehen.

Die Unterschiede zwischen den Gitterstrukturen der Figuren la bis lc bestehen zum einen in ihrer unterschiedlichen geometrischen Form, zum anderen aber auch in der verschiedenen Zweckbestimmung. Die Gitterstrukturen gemäß Figuren la und lc sind nämlich für die Verwendung bei Transmissions-Messung gedacht, während die Gitterstruktur der Figur 1b für Reflexions-Messung eingesetzt werden kann.

Um diese Zwecke zu erfüllen, müssen die Gitterstrukturen der Figuren 1a und 1c insgesamt aus einem entsprechend transparenten Material bestehen. Demgegenüber muß bei der Gitterstruktur für Reflexionsmessungen gemäß Figur 1b dafür Sorge getragen sein, daß wenigstens die in der Zeichnung dick dargestellten, parallel zur Gitter-Hauptebene verlaufenden Flächen 4 reflektierend ausgebildet, beispielsweise mit einer reflektierenden Metallschicht versehen sind.

Selbstverständlich können auch die Gitterstrukturen der Figuren la und lc für Reflexionsmessung und die Gitterstruktur der Figur 1b für Transmissionsmessung eingesetzt werden, wenn für eine entsprechend reflektierende bzw. lichtdurchlässige Ausbildung gesorgt wird.

Die Gitterstrukturen der Figuren la und 1b stimmen grundsätzlich überein, indem die Gitterstege im wesentlichen rechteckigen Querschnitt besitzen. Der Unterschied besteht jedoch darin, daß bei der Struktur der Figur la die Breite b der Stege 2 wesentlich geringer ist als die Breite g - b der Zwischenräume 3 zwischen den Stegen 2. Demgegenüber ist bei der Gitterstruktur der Figur 1b die Breite der Stege 2 einerseits sowie der Zwischenräume 3 andererseits im wesentlichen gleich.

Um für die Zwecke vorliegender Erfindung eingesetzt werden zu können, sollen die Gitterstrukturen folgende Bedingungen erfüllen:

| Gitterkonstante g | $0,5\ \mu m \leq g \leq 4\ \mu m$ |
| Steg/Gitterkonstanten-verhältnis b/g | $0,1 \leq b/g \leq 0,8$ |
| Gittertiefe a | $0,3\ \mu m \leq a \leq 4\ \mu m.$ |

In Figur 2 ist schematisch das Meßverfahren bei Messung der Strukturtiefe in einem transparenten Substrat 5 veranschaulicht. Zu diesem Zweck wird das Substrat 5 zumindest bereichsweise mit einer entsprechenden Referenz-Gitterstruktur versehen, wobei im gezeigten Ausführungsbeispiel die Gitterstruktur eine quadratische Gitterstruktur ist, d.h. im Querschnitt der Gitterstruktur der Figur 1b entspricht, jedoch ohne reflektierende Ausbildung.

Diese Referenz-Gitterstruktur wird mittels einer Lichtquelle 6, die entsprechend gerichtet ist, mit Weißlicht bestrahlt und dann die spektrale Farbverteilung des das Substrat 5 bzw. die Referenz-Gitterstruktur durchsetzenden Lichtes 7 mittels eines Empfängers 8, zweckmäßig eines Spektralphotometers gemessen.

Die Intensitätsverteilung $T (\lambda)$ des auf den Empfänger 8 fallenden Lichtes abhängig von der Wellenlänge $\lambda$ ist im Prinzip in Figur 4 gezeigt, wobei sich bei Transmissionsmessung abhängig von der Tiefe a der Referenz-Gitterstruktur des Substrats 5 ein Minimum der Strahlungsintensität $T (\lambda)$ bei einer bestimmten Wellenlänge $_{min}$ ergibt. Dies bedeutet also, daß das Intensitäts-Minimum bzw. dessen Wellenlänge $\lambda_{min}$ ein direktes Maß für die erreichte Tiefe a der Struktur des Referenzgitters darstellt. Es kann somit auf einfache Weise lediglich durch Feststellung der Wellenlänge des Intensitätsminimums die jeweils erzielte Strukturtiefe a in einfacher und rascher Weise festgestellt werden.

Dies soll an folgendem **Beispiel** verdeutlicht werden:

Es wurde eine Transmissionsmessung bei direkter Durchstrahlung und einem Empfangswinkel von 0° durchgeführt, wobei als Referenz-Gitterstruktur ein rechteckiges Gitter mit einer Gitterkonstanten von 2 μm und einem Steg-Gitterkonstantenverhältnis b/g = 1:2 verwendet wurde. Das Substrat besaß einen Brechungsindex n = 1,466.

Ausgehend von dem vorerwähnten Brechungsindex und mit $c_3$ von -285 nm (gemäß Gleichung (II)) ergibt sich folgende Beziehung für die Ermittlung der Strukturtiefe a:

$$a = (2,1428 \cdot \lambda_{min} -285)\ nm$$

Die Zuordnung von erzielter Strukturtiefe, Minimum-Wellenlänge und Farbe ist wie folgt:

| erzielte Strukturtiefe a [nm] | Minimumwellenlänge $\lambda_{min}$[nm] | Farbe |
| --- | --- | --- |
| 1000 | 600 | blau |
| 800 | 510 | pink |
| 600 | 414 | gelborange |
| 400 | 320 | blaßgelb |

Vorstehende Angaben zeigen deutlich, daß einerseits eine genaue spektrographische Messung der erzielten Strukturtiefe möglich ist, andererseits aber auch eine rein visuelle Beurteilung anhand der sich infolge der geringen Intensität bestimmter Farben ergebenden Farbveränderungen des weißen Meßlichtstrahles.

Die Meßanordnung für die Ermittlung der Strukturtiefe bei einem reflektierenden Substrat ist schematisch in Figur 3 gezeigt. Das Substrat 5' ist ebenfalls mit einer Referenz-Gitterstruktur der Strukturtiefe a versehen. Allerdings ist die Ausbildung so, daß zumindest die auf die Lichtquelle 6' und den Empfänger 8', der auf der gleichen Seite des Substrats 5' wie die Lichtquelle 6' angeordnet ist, hinweisende Oberfläche des Substrats 5' reflektierend, z.B. mit einer metallischen Beschichtung 9 versehen ist.

Grundsätzlich können Lichtquelle 6' und Empfänger 8' mit der Lichtquelle 6 bzw. dem Empfänger 8 der Anordnung zur Transmissionsmessung übereinstimmen. Es kann jedoch bei Reflexionsmessung günstiger sein, wenn die Lichtquelle 6' nur Licht eines begrenzten Wellenlängenbereichs ausstrahlt oder der Empfänger 8' Licht eines bestimmten Wellenlängenbereichs empfängt, weil dann u.U. eine direkte Zuordnung von Intensitäts-Minima und -Maxima des auf den Empfänger 8' auftreffenden, reflektierten Lichtes der Lichtquelle 6' zu einer bestimmten Strukturtiefe a möglich ist.

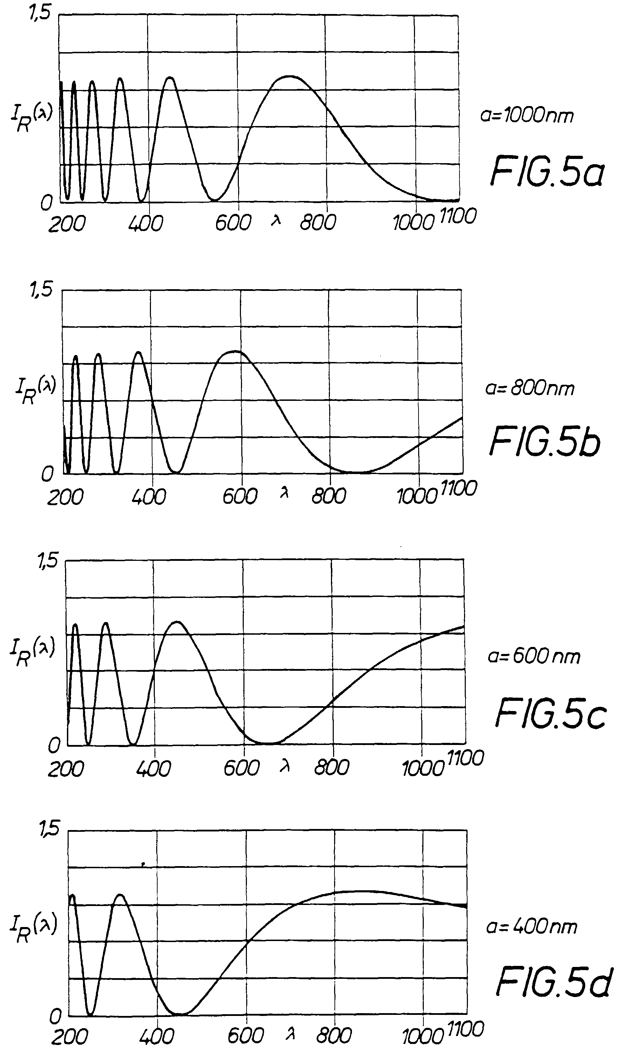

Die Figuren 5a bis 5d zeigen die Intensitätsverteilung $I_R$ des von der reflektierenden Oberfläche 9 des Substrats 5' reflektierten Lichtes abhängig von der Wellenlänge, wobei die Figuren 5a bis 5d die Intensitätsverteilung bei Reflexion an einer Grenzschicht Luft-Metall und Verwendung von Weißlicht darstellen. Die Intensitätsverteilung entspricht hierbei im wesentlichen der obigen Formel (III), wobei die Konstante c mit -50 nm anzunehmen ist.

Ein Vergleich der Figuren 5a bis 5d unter Berücksichtigung der jeweiligen Strukturtiefen a (die jeweils angegeben sind) zeigt, daß die Minima und Maxima der Intensitätsverteilung mit abnehmender Strukturtiefe a zu kleineren Wellenlängen wandern. Bei geschickter Auswahl der vom Empfänger 8' verarbeiteten Wellenlängen ist es dabei u.U. möglich, jeweils nur ein bestimmtes Intensitäts-Minimum zu verarbeiten, in welchem Fall eine relativ eindeutige Zuordnung von jeweiligem Intensitäts-Maximum bzw. -Minimum und Strukturtiefe a möglich ist. Für bestimmte Anwendungsfälle kann es außerdem günstig sein, nicht mit Weißlicht sondern mit Licht möglichst großer Wellenlänge, beispielsweise mit Infrarot-Beleuchtung, zu arbeiten, weil dann die Zahl der Intensitäts-Maxima und - Minima gegebenenfalls erheblich vermindert werden kann. Dies gilt vor allem bei großen Strukturtiefen der reflektierenden Referenz-Gitterstruktur, während bei relativ geringen Tiefen durchaus mit Licht des sichtbaren Wellenlängenbereiches gearbeitet werden kann. Selbstverständlich ist bei Verwendung von Infrarot-Licht eine rein visuelle Beurteilung der Strukturtiefe ohne Verwendung entsprechender Geräte nicht möglich. Bei Verwendung von Weißlicht ist eine visuelle, qualitative Grobbeurteilung aufgrund der sich ergebenden Farben auch für Reflexionsmessung möglich. Allerdings ergeben sich dabei Mischfarben.

**Patentansprüche**

1. Verfahren zur Messung der Tiefe einer Mikrostruktur beim Übertragen der Struktur mittels eines Prägeverfahrens in eine verformbare Schicht,
   **dadurch gekennzeichnet,**

   - daß in der zu übertragenden Mikrostruktur zumindest bereichsweise eine geometrisch einfache Referenz-Gitterstruktur vorgesehen ist,
   - daß die Referenz-Gitterstruktur mit einem Lichtstrahl bestrahlt wird, der einen bestimmten Wellenlängenbereich umfaßt,
   - daß die von der erreichten Prägetiefe abhängige Wellenlänge der auftretenden Intensitätsmaxima bzw. Intensitätsminima im Beugungsspektrum 0-ter Ordnung in Transmission oder in Reflexion gemessen und aufgrund von Vergleichswerten für die jeweilige Referenzstruktur und den eingestrahlten Wellenlängenbereich aus der gemessenen Wellenlänge die erzielte Prägetiefe ermittelt wird
   - oder daß aus der integralen Beurteilung der Farbe des gebeugten Lichts der 0-ten Ordnung aufgrund von Vergleichswerten auf die erreichte Prägetiefe geschlossen wird.

2. Verfahren nach Anspruch 1,
   **dadurch gekennzeichnet,**
   dass die Referenz-Gitterstruktur ein quadratisches, rechteckiges oder dreieckiges Profil aufweist.

3. Verfahren nach Anspruch 1 oder 2,
   **dadurch gekennzeichnet,**
   daß die Referenz-Gitterstruktur folgende Parameter aufweist:

| Gitterkonstante g | $0,5 \ \mu m \leq g \leq 4 \ \mu m$ |
|---|---|
| Steg/Gitterkonstanten-Verh. b/g | $0,1 \leq b/g \leq 0,8$ |

(fortgesetzt)

| Gittertiefe a | 0,3 µm ≤ a ≤4 µm. |
|---|---|

4. Verfahren nach einem der vorhergehenden Ansprüche,
**dadurch gekennzeichnet,**
dass die Farb-Auswertung der Meß-Lichtstrahles mittels eines Spektralphotometers erfolgt.

5. Verfahren nach einem der vorhergehenden Ansprüche,
**dadurch gekennzeichnet,**
daß der Meß-Lichtstrahl von sichtbarem Licht gebildet ist.

6. Verfahren nach Anspruch 5,
**dadurch gekennzeichnet,**
dass bei Auswertung der Farbe des die Referenz-Gitterstruktur durchsetzenden Meß-Lichscrahls weißes Licht verwendet wird.

7. Verfahren nach einem der Ansprüche 1 bis 4,
**dadurch gekennzeichnet,**
daß als Meß-Lichtstrahl Licht eines begrenzten Wellenlängenbereiches verwendet wird.


**Claims**

1. Method for measuring the depth of a microstructure when the structure is transferred using an embossing method into a deformable layer, characterized in that

   - the microstructure to be transferred consists at least in regions of a geometrically simple reference grating structure,
   - the reference grating structure is illuminated with a light beam that comprises a specific wavelength range,
   - the wavelength, dependent on the embossing gap achieved, of the emerging intensity maxima or intensity minima, respectively, in the 0-th order diffraction spectrum in transmission or in reflection is measured and, on the basis of comparative values for the respective reference structure and the incident wavelength range, the embossing depth achieved is determined from the measured wavelength
   - or conclusions are drawn as to the embossing depth achieved from integral assessment of the colour of the 0-th order diffracted light on the basis of comparative values.

2. Method according to Claim 1, characterized in that the reference grating structure has a square, rectangular or triangular profile.

3. Method according to Claim 1 or 2, characterized in that the reference grating structure has the following parameters:

| Grating constant g | 0.5 µm ≤ g ≤ 4 µm |
|---|---|
| Separation/grating constant ratio b/g | 0.1 ≤ b/g ≤ 0.8 |
| Grating depth a | 0.3 µm ≤ a ≤ 4 µm. |

4. Method according to one of the preceding claims, characterized in that the colour evaluation of the measuring light beam is performed using a spectrophotometer.

5. Method according to one of the preceding claims, characterized in that the measuring light beam is formed by visible light.

6. Method according to Claim 5, characterized in that white light is used when evaluating the colour of the measuring light beam passing through the reference grating structure.

7. Method according to one of Claims 1 to 4, characterized in that a limited wavelength range is used as light for the measuring light beam.

**Revendications**

1. Procédé de mesure de la profondeur d'une microstructure lors du transfert de la structure dans une couche déformable au moyen d'un procédé d'impression,

    caractérisé

    - en ce que, dans la microstructure à transférer, il est prévu, au moins par endroits, une structure de réseau de référence géométriquement simple,
    - en ce que la structure de réseau de référence reçoit un rayon de lumière qui présente une plage déterminée de longueurs d'onde,
    - en ce que la longueur d'onde, qui dépend de la profondeur d'impression obtenue, des maxima d'intensité ou minima d'intensité se présentant dans le spectre de diffraction d'ordre 0 est mesurée en transmission ou en réflexion et, sur la base de valeurs de comparaison prévues pour la structure de référence chaque fois considérée et la plage de longueurs d'onde rayonnées, la profondeur d'impression obtenue est déterminée à partir de la longueur d'onde mesurée
    - ou en ce qu'à partir de l'évaluation intégrale de la couleur de la lumière diffractée d'ordre 0, la profondeur d'impression obtenue est déduite sur la base de valeurs de comparaison.

2. Procédé suivant la revendication 1, caractérisé en ce que la structure de réseau de référence présente une forme profilée carrée, rectangulaire ou triangulaire.

3. Procédé suivant la revendication 1 ou 2, caractérisé en ce que la structure de réseau de référence présente les paramètres suivants :

| | |
|---|---|
| constante de réseau g | 0,5 µm £ g < 4 µm |
| rapport relief/constante de réseau b/g | 0,1 £ b/g £ 0,8 |
| profondeur de réseau a | 0,3 µm £ a £ 4 µm |

4. Procédé suivant l'une des revendications précédentes, caractérisé en ce que l'analyse de couleur du rayon lumineux de mesure a lieu au moyen d'un spectrophotomètre.

5. Procédé suivant l'une des revendications précédentes, caractérisé en ce que le rayon lumineux de mesure est formé d'une lumière visible.

6. Procédé suivant la revendication 5, caractérisé en ce que de la lumière blanche est utilisée lors de l'analyse de la couleur du rayon lumineux de mesure traversant la structure de réseau de référence.

7. Procédé suivant l'une des revendications 1 à 4, caractérisé en ce qu'une lumière présentant une plage limitée de longueurs d'onde est utilisée comme rayon lumineux de mesure.

FIG.1a  FIG.1b  FIG.1c

FIG.2

FIG.3

$T(\lambda)$

$\lambda_{min}$

$\lambda$

FIG.4

FIG.5a

a=1000nm

FIG.5b

a=800nm

FIG.5c

a=600nm

FIG.5d

a=400nm